# EUROPÄISCHE PATENTSCHRIFT

(11) **EP 2 213 951 B1**
(45) Veröffentlichungstag und Bekanntmachung des Hinweises auf die Patenterteilung: **10.08.2016**
(21) Anmeldenummer: 10150448.8
(22) Anmeldetag: 11.01.2010
(51) Int. Cl.: F24D 11/00, F24D 19/08, F24D 19/10, F24J 2/46

(54) **Solarheizanlage, Verfahren und Vorrichtung zur Verlängerung der Laufzeit einer Anlage mit einem geschlossenen Fluidkreislauf**
Solar heater, method and device for lengthening the duration of an assembly with a closed fluid circuit
Installation de chauffage solaire, procédé et dispositif de prolongement de la durée de fonctionnement d'une installation dotée d'un circuit de fluide fermé

(30) Priorität: 29.01.2009 DE 102009006724
(43) Veröffentlichungstag der Anmeldung: 04.08.2010
(73) Patentinhaber: Robert Bosch GmbH, 70442 Stuttgart (DE)
(72) Erfinder: Oertel, Kai, 70569 Stuttgart (DE); Stumpp, Hermann, 73730 Esslingen (DE)

(56) Entgegenhaltungen:
- WO-A1-2005/059445
- JP-A- S58 164 950

## Beschreibung

Die Erfindung betrifft ein Verfahren zur Verlängerung der Laufzeit einer Anlage mit einem geschlossenen Fluidkreislauf, insbesondere einer Solarheizanlage mit einem Solarfluidkreislauf, nach dem Oberbegriff des Patentanspruches 1.

Weiter betrifft die Erfindung eine Vorrichtung zur Verlängerung der Laufzeit einer Anlage mit einem geschlossenen Fluidkreislauf, insbesondere einer Solarheizanlage mit einem Solarfluidkreislauf, nach dem Oberbegriff des Anspruchs 4.

Nicht zuletzt betrifft die Erfindung auch eine Solaranlage mit einem Solarfluidkreislauf, in dem ein Solarfluid zirkulierbar ist und in dem Gasmengenansammlungen auftreten können, welche einen Betrieb der Solarfluidheizanlage beeinträchtigen, nach dem Oberbegriff des Anspruchs 8.

Solarheizanlagen zum Heizen von Trinkwasser sind aus dem Stand der Technik bekannt. Derartige Solarheizanlagen verfügen über einen Solarfluidkreislauf, durch den ein Solarfluid mittels einer Fördereinrichtung wie einer Pumpe gefördert wird. Das Solarfluid wird durch einen in den Solarfluidkreislauf integrierten Solarkollektor gefördert. Bei dem Durchlauf durch den Solarkollektor wird das Solarfluid bei entsprechender Sonnenbestrahlung erwärmt. In den Solarfluidkreislauf ist weiter ein Wärmespeicher integriert. Bei einer Inbetriebnahme der Solarheizanlage oder für Wartungszwecke muss das Solarfluid in den Solarfluidkreislauf gefüllt werden oder auch nachgefüllt werden. Hierzu werden sogenannte Befüllstationen oder Solarbefüllstationen verwendet.

Eine Solarbefüllstation gemäß dem Stand der Technik besteht aus einer Befüllpumpe, einem Vorratsbehälter für das Solarfluid und einem Filter zur Abscheidung von Schmutzpartikeln aus dem Solarfluid. Die Befüllstation wird über Schläuche an der Solarstation in den Solarfluidkreis angeschlossen. Der Befüllvorgang läuft dabei standardmäßig wie folgt ab.

Bei der Inbetriebnahme, nach einer Wartung oder zum Nachfüllen wird der Solarfluidkreis mit Solarfluid befüllt und gespült um möglichst die gesamte Luft aus dem Solarfluidkreis zu verdrängen. Durch die übliche einseitige Befüllung der Solarheizanlage mit Solarfluid kommt es beim Strömen des Solarfluids in der Fallleitung vom Solarkollektor zurück in den Vorratsbehälter zur Durchmischung des Solarfluids mit der in dem Solarfluidkreis befindlichen Luft in den Rohren des Solarfluidkreises. Dabei löst sich die Luft in der Flüssigkeit oder bildet Mikroblasen. Aufgrund der hohen Viskosität des üblicherweise als Glykol/Wassergemisch ausgebildeten Solarfluids dauert es eine relativ lange Zeitdauer, bis die in dem Solarfluid, welches sich beispielsweise in einem Auffangbehälter befindet, vorhandenen Blasen in dem Auffangbehälter an die Oberfläche aufsteigen und abgeschieden werden können. Neben der gesamten in dem Solarfluid gelösten Luft verbleibt auch nach der Inbetriebnahme meist noch ein großer Teil der Luft in Form von Mikroblasen in dem Solarfluid in dem Solarfluidkreis. Hinzu kommt, dass sich große Luftblasen in Luftsäcken (Hochpunkten) des Solarfluidkreises ansammeln und nicht ausgespült werden können.

In den Fluidkreislauf von Solar(heiz)anlagen kann sowohl durch eine unvollständige Befüllung, als auch im Betrieb Luft gelangen. Der Grund für den Lufteintritt im Betrieb ist eine Überhitzung des Solarfluids. Durch den bei der Verdampfung des Solarfluids entstehenden Überdruck kann Dampf aus dem Solarfluidkreislauf entweichen. Steht nach der Abkühlung und Kondensation nicht genügend Solarfluid als Reserve im Ausdehnungsgefäß zur Verfügung, so entsteht im Solarfluidkreislauf ein Unterdruck, der Luft von außen einsaugt. Ein größeres Luftvolumen im Solarfluidkreislauf kann die Förderung des Solarfluids durch die Pumpe verhindern, da dadurch entweder der Pumpendruck oder die noch verfügbare Flüssigkeitsmenge dann nicht mehr zur Zirkulation ausreicht. In der Folge können bei solarer Einstrahlung durch Stagnationseffekte erhebliche Schäden im Solarkollektor auftreten. Luft tritt typischerweise in drei Formen im Solarfluidkreislauf auf: als Makroblasen, als Mikroblasen und gelöst im Solarfluid. Während Mikroblasen und gelöste Luft den Betrieb der Anlage nicht beeinträchtigen, können große Makroblasen zu Unterbrechungen des Massenstroms im Solarfluidkreislauf führen. Problematisch ist, dass während des Betriebs der Anteil der Makroblasen an der gesamten Luftmenge zunehmen kann und dadurch der einwandfreie Betrieb erst nach einiger Zeit gestört wird. Durch die hohe Viskosität des Solarfluids steigen Mikroblasen bei Anlagenstillstand langsam bis zum höchsten Punkt, dem Solarkollektor, auf. Aufgrund hoher Temperaturen und geringer Drücke kommt es an der höchsten Stelle des Solarfluidkreislaufes im Solarkollektor auch zum Desorbieren der sich im Solarfluid befindenden gelösten Luft. Mit großer Wahrscheinlichkeit sammelt sich also die gesamte Luft nach einiger Zeit in Form von Makroblasen im oberen Teil des Solarfluidkreislaufes, also im Solarkollektor an. Bei normaler Betriebsweise ist die Temperatur des Solarfluids im Solarkollektor bei eingeschalteter Pumpe immer höher als im unteren kalten Bereich. Die durch Desorbtion freigewordene Luft kann also im Normalbetrieb nicht wieder vollständig im Solarfluid gelöst werden.

Die JP S58 164950 A offenbart einen solaren Wasserheizer mit einer mechanischen Vorrichtung zum Entfernen von Luftblasen, die sich in einem Wasserraum unterhalb eines Absorbers ansammeln, wodurch sich stabile Wärmeübertragungsbedingungen einstellen.

Der Erfindung liegt die Aufgabe zugrunde, die Luft im Solarfluidkreislauf, die unter anderem in Form von großen Luftblasen auftritt und den Betrieb einer Solaranlage gefährdet, zu verringern. Insbesondere sind Lufteinschlüsse derart zu vermeiden, dass diese keinen oder nur einen geringen negativen Einfluss auf den Betrieb der Anlage haben. Insbesondere ist es eine Aufgabe, eine Notlauffunktion, die bei gleicher Luftmenge im Solarfluidkreislauf die Funktionsfähigkeit der Anlage bis zur nächsten Wartung länger aufrecht erhalten kann, zu schaffen.

Erfindungsgemäß wird dies durch die Gegenstände mit den Merkmalen des Patentanspruches 1, des Patentanspruchs 4 und des Patentanspruchs 8 gelöst. Vorteilhafte Weiterbildungen sind den Unteransprüchen zu entnehmen.

Das erfindungsgemäße Verfahren zur Verlängerung der Laufzeit einer Anlage mit einem geschlossenen Fluidkreislauf, insbesondere einer Solarheizanlage mit einem Solarfluidkreislauf, bei dem mindestens eine Gasmengenansammlung kritischer Größe im Fluidkreislauf erfasst und in mindestens zwei Teilmengen gewandelt wird, wobei mindestens eine der Teilmengen in dem Fluid, insbesondere dem Solarfluid, gelöst und/oder absorbiert wird, ist dadurch gekennzeichnet, dass zum Wandeln der Gasmengenansammlung in mindestens zwei Teilmengen, zum Absorbieren und/oder zum Lösen eine Strömungsgeschwindigkeit im Fluidkreislauf der Anlage erhöht wird.

In einer Ausführungsform der vorliegenden Erfindung ist vorgesehen, dass zum Absorbieren und/oder zum Lösen das Fluid, insbesondere das Solarfluid, abgekühlt wird.

In einer weiteren Ausführungsform der vorliegenden Erfindung ist vorgesehen, dass beim Wandeln der Gasmengenansammlung in mindestens zwei Teilmengen zum Absorbieren und/oder zum Lösen das Fluid verwirbelt wird.

Die erfindungsgemäße Vorrichtung zur Verlängerung der Laufzeit einer Anlage mit einem geschlossenen Fluidkreislauf, insbesondere einer Solarheizanlage mit einem Solarfluidkreislauf, wobei Mittel zum Reduzieren zumindest der Größe von Gasmengenansammlungen vorgesehen sind, mittels der Gasmengenansammlungen mit einer kritischen Größe in mindestens zwei Teilmengen wandelbar sind, mittels der Mittel zum Reduzieren die Gasmengenansammlungen wenigstens teilweise in Teilmengen geringerer Größe wandelbar sind, die in dem Fluid, insbesondere dem Solarfluid, lösbar und/oder absorbierbar sind, nicht vor, dass die Mittel eine Einrichtung zum Erhöhen der Strömungsgeschwindigkeit umfassen.

In einer Ausführungsform der vorliegenden Erfindung ist vorgesehen, dass die Mittel eine Einrichtung zum Abkühlen des Fluids, insbesondere des Solarfluids, umfassen.

Eine weitere Ausführungsform der vorliegenden Erfindung sieht vor, dass die Mittel eine Einrichtung zum Verwirbeln des Fluids umfassen.

Zusätzlich sieht eine weitere Ausführungsform der vorliegenden Erfindung vor, dass die Mittel mindestens eine Bypassleitung umfassen, um das Solarfluid an einem Speicher-Wärmetauscher, einem Wärmespeicher und oder einem Wärmetauscher vorbeizuführen.

Die erfindungsgemäße Solarheizanlage mit einem Solarfluidkreislauf, in dem ein Solarfluid zirkulierbar ist und in dem Gasmengenansammlungen auftreten können, welche einen Betrieb der Solarfluidheizanlage beeinträchtigen, ist dadurch gekennzeichnet, dass mindestens eine erfindungsgemäße Vorrichtung zur Verlängerung der Laufzeit von geschlossenen Fluidkreisläufen vorgesehen ist, um eine Verlängerung der Laufzeit bis zu einem folgenden Wartungsintervall zu gewährleisten.

Mit dem erfindungsgemäßen Verfahren und der erfindungsgemäßen Vorrichtung werden insbesondere die folgenden Vorteile realisiert:
Nach einer Diagnose von Luft in dem Solarfluidkreislauf durch eine Regel- oder Diagnoseeinheit der Solarheizanlage wird die Solarfluidkreislaufpumpe mit einem modifizierten Betriebskonzept betrieben, sodass bei höheren Temperaturen desorbierte Gase im kalten Zustand bei hohem Volumenstrom im Solarfluid wieder absorbiert werden. Durch die Absorption der Luft im Solarfluid und die Durchwirbelung und Bildung kleiner Blasen kann das Luftvolumen der Makroblasen in den Lufttaschen deutlich verringert werden. Durch die Reduktion des Lufttaschenvolumens wird die zusätzlich zu überwindende Förderhöhe durch die Pumpe reduziert, bzw. das Ansaugen von Luft vermieden, sodass die Pumpe weiterarbeiten kann.

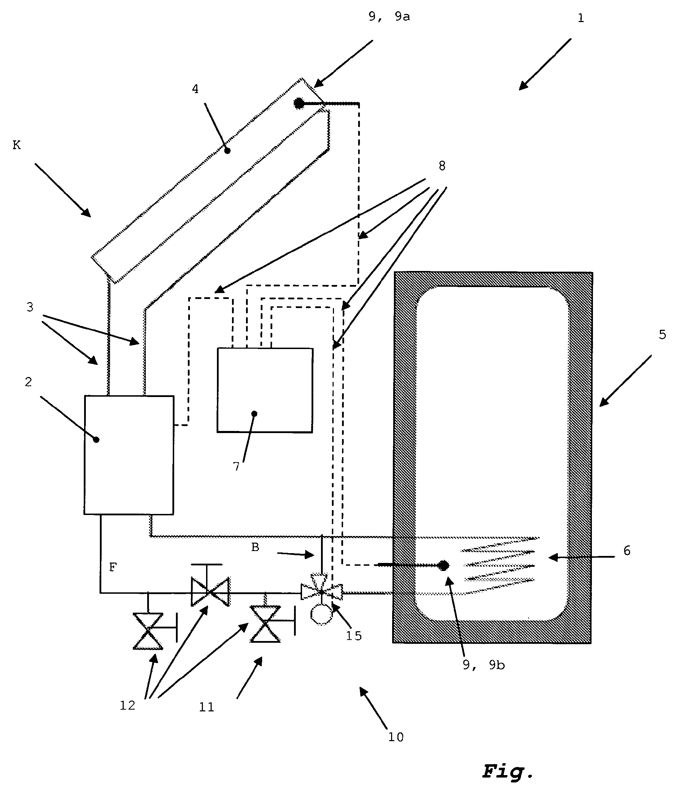

Die Zeichnung stellt ein Ausführungsbeispiel der Erfindung dar und zeigt in der einzigen Figur:
- Figur: schematisch den Aufbau einer erfindungsgemäßen Solarheizanlage mit einer Vorrichtung zur Verlängerung der Laufzeit der Solarheizanlage.

Die Figur zeigt schematisch den Aufbau einer erfindungsgemäßen Solarheizanlage 1 mit einer Vorrichtung 10 zur Verlängerung der Laufzeit der Solarheizanlage 1. Die Solarheizanlage 1 umfasst einen als Solarfluidkreislauf ausgebildeten Fluidkreislauf K, in welchem eine Solarstation 2, Leitungen 3, ein Solarkollektor 4 und ein Wärmespeicher 5 umfasst sind. In dem Solarfluidkreis K zirkuliert ein Solarfluid F, welches durch eine hier nicht dargestellte Fördereinrichtung im Betrieb durch den Solarfluidkreis K gefördert wird. Das zirkulierende Solarfluid F wird in dem Solarkollektor 4 bei Sonneneinstrahlung erwärmt und gibt diese Wärme über einen Wärmetauscher 6 an ein Wärmeträgerfluid, welches sich in dem Wärmespeicher 5 befindet, ab. Um die Solarheizanlage 1 und insbesondere den Solarfluidfluss und die Wärmeübertragung zu regeln, weist die Solarheizanlage 1 weiter einen Solarregler 7 auf. Der Solarregler 7 ist über Datenleitungen 8 mit der Solarstation 2 und mit Temperatursensoren 9 an dem Solarkollektor 4 und dem Wärmespeicher 5 gekoppelt. Ein Solarkollektortemperatursensor 9a leitet die Temperatur an dem Solarkollektor 4 an den Solarregler 7 weiter. Entsprechend leitet ein Wärmespeichertemperatursensor 9b die Temperatur an dem Wärmespeicher 5 an den Solarregler 7 weiter. Die Vorrichtung 10 umfasst Mittel 11 zum Reduzieren zumindest der Größe von Gasmengenansammlungen, mit denen die Gasmengenansammlungen mit einer kritischen Größe in mindestens zwei Teilmengen wandelbar sind. Mit den Mitteln 11 zum Reduzieren die Gasmengenansammlungen lassen sich' die Gasmengenansammlungen wenigstens teilweise in Teilmengen geringerer Größe wandeln, die in dem Fluid, insbesondere dem Solarfluid, lösbar und/oder absorbierbar sind. Dazu können die Mittel 11 eine Einrichtung zum Erhöhen der Strömungsgeschwindigkeit umfassen, beispielsweise eine Pumpe, eine Düseneinrichtung oder dergleichen. Weiter können die Mittel 11 eine Einrichtung zum Abkühlen des Fluids, insbesondere des Solarfluids F, umfassen. Die Abkühlung kann auch auf natürliche Weise, beispielsweise durch eine nächtliche Temperaturabsenkung, realisiert werden. Auch können die Mittel 11 eine Einrichtung zum Verwirbeln des Fluids umfassen, beispielsweise einen Diffusor, Strömungswiderstände, Laufräder und dergleichen. In der Figur sind schematisch Absperrventile 12 dargestellt. Die Mittel 11 können weiterhin mindestens eine Bypassleitung B umfassen, um das Solarfluid F an dem Wärmespeicher 5 bzw. dem Wärmespeicher-Wärmetauscher 6 vorbeizuführen und somit die Temperatur des Solarfluids F gering zu halten. Der Bypass B ist über ein Mehrwegeventil 15 mit den Leitungen 3 koppelbar oder entkoppelbar. Das Mehrwegeventil 15 lässt sich beispielsweise über den Solarregler 7 steuern. Entsprechend ist das Mehrwegeventil 15 über eine Datenleitung 8 mit dem Solarregler 7 gekoppelt.

Der Erfindung ist im Folgenden zusammengefasst beschrieben:
Durch ein Diagnosesystem wird ein Luftanteil im Solarfluidkreislauf K diagnostiziert. Solange noch eine Förderung des Solarfluids F möglich ist, wird bei tiefen Außentemperaturen und möglichst ohne Solarstrahlung, z. B. während der Nachtzeit, der abgekühlte Solarkollektor 4 durch eine Umwälzpumpe bei maximalem Volumenstrom konstant oder in Intervallschaltung durchströmt. Dadurch wird das Solarfluid F im gesamten Solarfluidkreislauf K stark abgekühlt. Die kälteste Stelle des Solarfluidkreislaufes K befindet sich nun im Solarkollektor 4. Die Kombination von hohem Volumenstrom mit tiefer Fluidtemperatur führt dazu, dass ein Teil der Luft im Solarkollektor 4 wieder im Fluid gelöst werden kann. Durch den hohen Volumenstrom und die daraus folgende Durchmischung wird außerdem ein Teil der Luft in Mikroblasen verwandelt, die vom Volumenstrom mitgerissen werden. Der Luft in den Mikroblasen bietet sich dadurch eine größere Kontaktoberfläche, um im kalten Solarfluid F in Lösung zu gehen. Vorteilhaft für den Betriebsmodus ist der Bypass B zum Wärmeübertrager 6 im Wärmespeicher 5, um eine Auskühlung des Speichers 5 zu vermeiden. Durch ein zusätzliches steuerbares Dreiwegeventil 15 kann zwischen der Durchströmung des Bypasses B und des Wärmeübertragers 6 im Speicher 5 umgeschaltet werden. Da im Betrieb bei höheren Temperaturen die Luft wieder desorbiert, ist bei der Diagnose von Luft im Solarfluidkreislauf K eine Wartung der Anlage zu veranlassen.

## Patentansprüche

1. Verfahren zur Verlängerung der Laufzeit einer Anlage mit einem geschlossenen Fluidkreislauf (K), insbesondere einer Solarheizanlage (1) mit einem Solarfluidkreislauf, wobei mindestens eine Gasmengenansammlung kritischer Größe im Fluidkreislauf (K) erfasst und in mindestens zwei Teilmengen gewandelt wird, wobei
mindestens eine der Teilmengen in dem Fluid, insbesondere dem Solarfluid (F), gelöst und/oder absorbiert wird, **dadurch gekennzeichnet, dass** zum Wandeln der Gasmengenansammlung in mindestens zwei Teilmengen, zum Absorbieren und/oder zum Lösen eine Strömungsgeschwindigkeit im Fluidkreislauf (K) der Anlage erhöht wird.

2. Verfahren nach Anspruch 1,
**dadurch gekennzeichnet, dass** zum Absorbieren und/oder zum Lösen das Fluid, insbesondere das Solarfluid (F), abgekühlt wird.

3. Verfahren nach Anspruch 1 oder 2,
**dadurch gekennzeichnet, dass** beim Wandeln der Gasmengenansammlung in mindestens zwei Teilmengen zum Absorbieren und/oder zum Lösen das Fluid verwirbelt wird.

4. Vorrichtung (10) zur Verlängerung der Laufzeit einer Anlage mit einem geschlossenen Fluidkreislauf (K), insbesondere einer Solarheizanlage (1) mit einem Solarfluidkreislauf, wobei Mittel (11) zum Reduzieren zumindest der Größe von Gasmengenansammlungen vorgesehen sind, mittels der Gasmengenansammlungen mit einer kritischen Größe in mindestens zwei Teilmengen wandelbar sind, wobei
mittels der Mittel (11) zum Reduzieren die Gasmengenansammlungen wenigstens teilweise in Teilmengen geringerer Größe wandelbar sind, die in dem Fluid, insbesondere dem Solarfluid (F), lösbar und/oder absorbierbar sind, **dadurch gekennzeichnet, dass** die Mittel (11) eine Einrichtung zum Erhöhen der Strömungsgeschwindigkeit umfassen.

5. Vorrichtung (10) nach Anspruch 4,
**dadurch gekennzeichnet, dass** die Mittel (11) eine Einrichtung zum Abkühlen des Fluids, insbesondere des Solarfluids (F), umfassen.

6. Vorrichtung (10) nach Anspruch 4 oder 5,
**dadurch gekennzeichnet, dass** die Mittel (11) eine Einrichtung zum Verwirbeln des Fluids umfassen.

7. Vorrichtung (10) nach einem der Ansprüche 4 bis 6,
**dadurch gekennzeichnet, dass** die Mittel (11) mindestens eine Bypassleitung (B) umfassen, um das Solarfluid (F) an einem Wärmespeicher (5) und oder einem Wärmetauscher (6) vorbeizuführen.

8. Solarheizanlage (1), mit einem Solarfluidkreislauf (K), in dem ein Solarfluid zirkulierbar ist und in dem Gasmengenansammlungen auftreten können, welche einen Betrieb der Solarfluidheizanlage (1) beeinträchtigen,
**dadurch gekennzeichnet, dass** mindestens eine Vorrichtung (10) zur Verlängerung der Laufzeit von geschlossenen Fluidkreisläufen (K) nach einem der vorherigen Ansprüche 4 bis 7 vorgesehen ist, um eine Verlängerung der Laufzeit bis zu einem folgenden Wartungsintervall zu gewährleisten.

## Claims

1. Method for lengthening the running time of a system with a closed fluid circuit (K), in particular a solar heating system (1) with a solar fluid circuit,
wherein at least one accumulation of a quantity of gas of a critical size in the fluid circuit (K) is detected and changed into at least two partial quantities,
wherein at least one of the partial quantities is dissolved and/or absorbed in the fluid, in particular the solar fluid (F), **characterized in that**, for the changing of the accumulation of a quantity of gas into at least two partial quantities, for the absorbing and/or for the dissolving, a flow rate in the fluid circuit (K) of the system is increased.

2. Method according to Claim 1,
**characterized in that**, for the absorbing and/or for the dissolving, the fluid, in particular the solar fluid (F), is cooled.

3. Method according to Claim 1 or 2,
**characterized in that**, when changing the accumulation of a quantity of gas into at least two partial quantities for the absorbing and/or for the dissolving, the fluid is swirled.

4. Device (10) for lengthening the running time of a system with a closed fluid circuit (K), in particular a solar heating system (1) with a solar fluid circuit,
wherein means (11) for reducing at least the size of accumulations of quantities of gas are provided, by means of which accumulations of quantities of gas of a critical size can be changed into at least two partial quantities,
wherein, by means of the reducing means (11), the accumulations of quantities of gas can be changed at least partially into partial quantities of a smaller size, which can be dissolved and/or can be absorbed in the fluid, in particular the solar fluid (F),
**characterized in that** the means (11) comprise a device for increasing the flow rate.

5. Device (10) according to Claim 4,
**characterized in that** the means (11) comprise a device for cooling the fluid, in particular the solar fluid (F).

6. Device (10) according to Claim 4 or 5,
**characterized in that** the means (11) comprise a device for swirling the fluid.

7. Device (10) according to one of Claims 4 to 6,
**characterized in that** the means (11) comprise at least one bypass line (B), in order to carry the solar fluid (F) past a heat accumulator (5) and/or a heat exchanger (6).

8. Solar heating system (1), with a solar fluid circuit (K), in which a solar fluid can be circulated and in which there can occur accumulations of quantities of gas that impair operation of the solar fluid heating system (1), **characterized in that** at least one device (10) for lengthening the running time of closed fluid circuits (K) according to one of the preceding Claims 4 to 7 is provided, in order to ensure a lengthening of the running time up to a following maintenance interval.

## Revendications

1. Procédé de prolongation de la durée de fonctionnement d'une installation présentant un circuit fermé (K) de fluide, en particulier une installation (1) de chauffage solaire dotée d'un circuit de fluide solaire, dans lequel une quantité de gaz rassemblée au moins à une taille critique gaz dans le circuit (K) de fluide est convertie en au moins deux quantités partielles,
au moins l'une des quantités partielles étant dissoute et/ou absorbée dans le fluide, en particulier le fluide solaire (F),
**caractérisé en ce que**
pour convertir la quantité de gaz rassemblée en au moins deux quantités partielles, une vitesse d'écoulement dans le circuit (K) de fluide de l'installation est augmentée en vue de les absorber et/ou de les dissoudre.

2. Procédé selon la revendication 1, **caractérisé en ce que** le fluide, en particulier le fluide solaire (F), est refroidi en vue de l'absorption et/ou de la dissolution.

3. Procédé selon les revendications 1 ou 2, **caractérisé en ce que** lors de la conversion de la quantité de gaz rassemblée en au moins deux quantités partielles en vue de leur absorption et/ou de leur dissolution, le fluide est tourbillonné.

4. Ensemble (10) permettant de prolonger la durée de fonctionnement d'une installation présentant un circuit fermé (K) de fluide, en particulier une installation (1) de chauffage solaire dotée d'un circuit de fluide solaire, dans lequel
des moyens (11) permettant au moins de réduire la taille de la quantité de gaz rassemblée sont prévus et permettent de convertir des quantités de gaz rassemblées à une taille critique en au moins deux quantités partielles,
les moyens (11) de réduction des quantités de gaz rassemblées permettant de les convertir au moins partiellement en quantités partielles de taille plus petite qui peuvent être dissoutes et/ou absorbées dans le fluide, notamment le fluide solaire (F),
**caractérisé en ce que**
les moyens (11) comprennent un dispositif d'augmentation de la vitesse d'écoulement.

5. Ensemble (10) selon la revendication 4, **caractérisé en ce que** les moyens (11) comprennent un dispositif de refroidissement du fluide et en particulier du fluide solaire (F).

6. Ensemble (10) selon les revendications 4 ou 5, **caractérisé en ce que** les moyens (11) comprennent un dispositif de tourbillonnage du fluide.

7. Ensemble (10) selon l'une des revendications 4 à 6, **caractérisé en ce que** les moyens (11) comprennent au moins un conduit de dérivation (B) qui fait passer le fluide solaire (F) sur un accumulateur de chaleur (5) ou sur un échangeur de chaleur (6).

8. Installation (1) de chauffage solaire dotée d'un circuit (K) de fluide solaire dans lequel un fluide solaire peut être mis en circulation et dans lequel des quantités de gaz peuvent se rassembler et détériorer le fonctionnement de l'installation (1) de chauffage à fluide solaire,
**caractérisée en ce que**
au moins un ensemble (10) de prolongation de la durée de fonctionnement de circuits fermés (K) de fluide selon l'une des revendications 4 à 7 est prévu pour assurer une prolongation de la durée de fonctionnement jusqu'à l'intervention suivante de maintenance.
